# EUROPÄISCHE PATENTSCHRIFT

(11) **EP 2 734 088 B1**
(45) Veröffentlichungstag und Bekanntmachung des Hinweises auf die Patenterteilung: **21.10.2015**
(21) Anmeldenummer: 12738112.7
(22) Anmeldetag: 20.07.2012
(51) Int. Cl.: A47J 27/08, A47J 27/092

(54) **NIEDERDRUCKKOCHTOPF**
LOW-PRESSURE COOKING POT
CUISEUR BASSE PRESSION

(30) Priorität: 21.07.2011 DE 102011079597
(43) Veröffentlichungstag der Anmeldung: 28.05.2014
(60) Teilanmeldung: 14181915.1
(73) Patentinhaber: Gero Vertriebs-GmbH, 42329 Wuppertal (DE)
(72) Erfinder: DE BASTOS REIS PORTUGAL, Mario, P-4520-249 Santa Maria Da Feira (PT)
(74) Vertreter: Lippert, Stachow & Partner
(86) Internationale Anmeldenummer: PCT/EP2012/064274
(87) Internationale Veröffentlichungsnummer: WO 2013/011118

(56) Entgegenhaltungen:
- WO-A1-2005/074767
- WO-A1-2009/098317
- CH-A- 252 718
- DE-A1- 4 411 422
- DE-B- 1 265 940
- DE-U1- 9 005 985
- DE-U1-202007 003 676
- FR-A1- 2 940 389
- US-A- 6 019 029

## Beschreibung

Die Erfindung betrifft einen Niederdruckkochtopf, bestehend aus einem mit einem bestimmten Fassungsvermögen versehenen runden oder ovalen Topf, der um seine obere Öffnung herum einen nach außen geneigten Schüttrand aufweist, einem auf die obere Öffnung passenden Deckel mit einem Dichtring aus elastischem Material, einem an dem Deckel vorgesehenen Verschlussmechanismus, der mit beweglichen Klauen zum Hintergreifen des Schüttrandes ausgestattet ist sowie einem in dem Deckel vorgesehenen Überdruckventil.

Bei einem bekannten, ähnlich ausgebildeten Kochgefäß (WO 2009/098317 A1), welches als Schnellkochtopf ausgebildet ist, ist in den Deckelrand ein umlaufender Dichtring eingelegt, der einen etwa V-förmigen Querschnitt aufweist. Während die Basis des V-förmigen Dichtrings an der Innenseite des äußeren Umfangsrandes des Deckels anliegt, dienen die beiden zur Mitte des Gefäßes weisenden Profilschenkel als Dichtlippen, die sich durch den sich in dem Druckgefäß aufbauenden Überdruck gegen die entsprechenden Dichtungsflächen anlegen.

Ausgehend von diesem Stand der Technik liegt der Erfindung die Aufgabe zugrunde, den Deckel mit seinem umlaufenden Dichtbereich einfacher zu gestalten, wobei zu berücksichtigen ist, dass bei Niederdruckkochtöpfen geringere Überdrücke entstehen.

Erfindungsgemäß wird diese Aufgabe dadurch gelöst, dass der Dichtring den äußeren Umfang des Deckelrandes umgibt und den Deckelrand mit einem oberen Flansch und einem unteren Flansch umgreift, dass an dem Dichtring eine von seinem äußeren Umfang ausgehende Dichtlippe vorgesehen ist, die ein Stück nach innen versetzt ist und sich nach unten erstreckt, dass die Dichtlippe bei aufgesetztem Deckel unter Spannung an der Innenseite des Topfes anliegt und dass sich die Dichtlippe so weit nach unten erstreckt, dass sie noch an der Innenseite des Topfes anliegt, wenn der Deckel in der Betriebsstellung leicht angehoben ist und die Klauen mit ihren unteren Verriegelungsschenkeln an der Unterseite des Schüttrandes des Topfes anliegen.

Bei dem erfindungsgemäßen Niederdruckkochtopf kann dadurch der Korpus des Deckels sehr einfach ausgebildet und mit geringem Aufwand hergestellt werden. Es ist lediglich erforderlich, dass der Deckel als ebenflächige Scheibe ausgebildet ist. Der Dichtring umgreift dann den äußeren Rand des Deckels und ist somit im Betriebszustand des Kochtopfes nach außen sichtbar. Die Dichtung wird dabei insbesondere dadurch erzielt, dass sich die Dichtlippe unter Spannung an die Innenseite des Topfes anlegt, wobei durch den entstehenden Überdruck in dem Topf die Lippe zusätzlich gegen die Topfinnenfläche gedrückt wird, wodurch sich die Dichtwirkung noch erhöht.

Nach der DE 90 05 985 U1 ist ein Kochgefäß bekannt, welches die Merkmale eines Druckkochtopfs aufweist, in dem beim Kochen hohe Drücke auftreten. Bei einer der in der Druckschrift beschriebenen Ausführungsformen ist ein Dichtring dargestellt, der den äußeren Umfang des Deckelrandes umgibt und den Deckelrand mit einem oberen Flansch und einem unteren Flansch umgreift. Ansonsten sind der Verschlussmechanismus und die Deckelkonstruktion völlig unterschiedlich zu dem Anmeldungsgegenstand gestaltet, sodass der Dichtring in seiner Funktion nicht mit dem Dichtring gemäß der vorliegenden Anmeldung vergleichbar ist.

Bei dem erfindungsgemäßen Niederdruckkochtopf mit dem entsprechend ausgebildeten Dichtring kann der Korpus des Deckels sehr einfach ausgebildet sein und kann mit geringem Aufwand hergestellt werden. Der Dichtring, der den äußeren Rand des Deckels umgreift, ist im Betriebszustand des Kochtopfs (außer im Bereich der Klauen) nach außen sichtbar, und die Dichtung wird dabei insbesondere dadurch erzielt, dass sich die Dichtlippe unter Spannung an die Innenseite des Topfes anlegt, wobei durch den entstehenden Überdruck in dem Topf die Dichtlippe zusätzlich gegen die Topfinnenfläche gedrückt und die Dichtwirkung dadurch erhöht wird.

Um das Aufsetzen des Deckels auf den Topf zu erleichtern, kann die Dichtlippe an ihrem unteren Ende mit einem schräg nach innen geneigten bzw. gebogenen umlaufenden Bereich versehen sein, dessen unterer Rand einen Außendurchmesser aufweist, der kleiner als der Innendurchmesser des Topfes ist. Dadurch entsteht eine gute Führung des Dichtrings beim Aufsetzen auf den Topf und beim weiteren Aufsetzen des Deckels auf den Topf wird die Dichtlippe nach außen gedrückt und legt sich dichtend an die Innenseite des Topfes an.

Um den Dichteffekt noch zu verbessern, weist die umlaufende Dichtlippe des Dichtrings oberhalb des schräg nach innen gebogenen Bereichs eine Einschnürung auf, sodass nur ein schmaler definierter Bereich der Dichtlippe an der Innenseite des Topfes anliegt.

In der Betriebsstellung liegt die Dichtlippe somit mit einem nach außen gerichteten, umlaufenden Vorsprung, der zwischen dem nach innen gebogenen Bereich und der Einschnürung gebildet ist, an der Innenwand des Topfes an. Dadurch wird eine sehr gute Dichtung erzeugt, die durch den Innendruck noch unterstützt wird.

Vorzugsweise wird der als ebenflächige Scheibe ausgebildete Deckel aus durchsichtigem Material hergestellt, sodass das Kochgut von außen sichtbar ist. Als Material kann Glas oder durchsichtiges Kunststoffmaterial verwendet werden, jedoch ist es ebenso auch möglich, als Deckel eine Metallscheibe, beispielsweise aus Edelstahl, zu verwenden. Auch könnte der Deckel im Bedarfsfall konkav oder konvex ausgebildet sein.

Bei einer bevorzugten Ausführungsform der Erfindung ist an dem Deckel ein Handgriff sowie ein an dem Handgriff angeordnetes Betätigungselement zum Lösen und Verriegeln der Klauen vorgesehen. Durch diese Maßnahme ist eine leichte Handhabung des erfindungsgemäßen Niederdruckkochtopfs möglich.

Die Erfindung ist in der Zeichnung beispielhaft veranschaulicht und im Nachstehenden im Einzelnen anhand der Zeichnung beschrieben. Es zeigen:
- Fig. 1:: eine Seitenansicht des erfindungsgemäßen Niederdruckkochtopfs
- Fig. 2:: einen Schnitt durch den an dem Deckel vorgesehenen Dichtring,

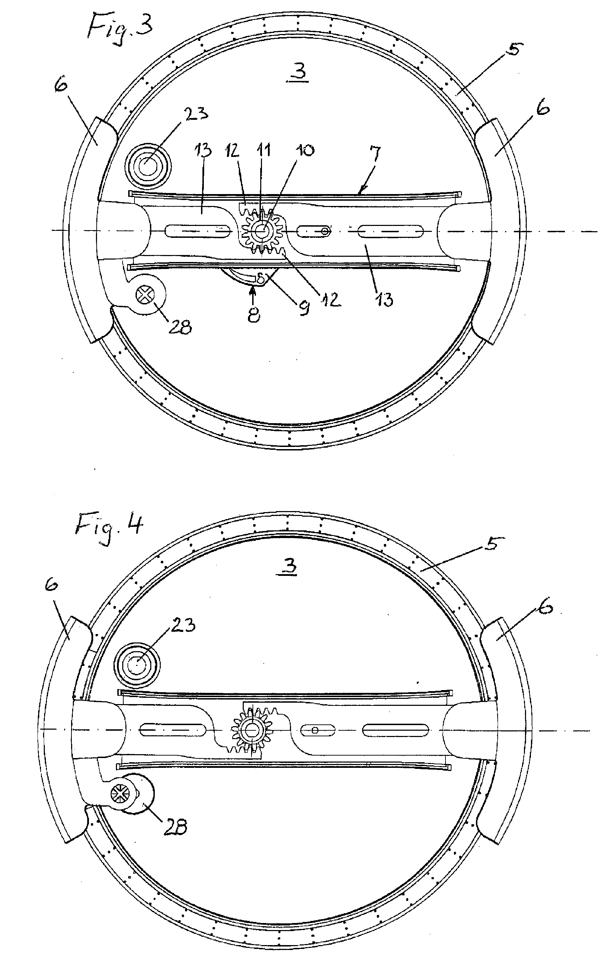

- Fig. 3:: eine Draufsicht auf den Deckel, wobei die verriegelte Stellung des Verschlussmechanismus dargestellt ist,
- Fig. 4:: die gleiche Draufsicht wie Fig. 3, wobei jedoch der Verschlussmechanismus in geöffneter Stellung dargestellt ist,
- Fig. 5:: das Überdruckventil in geschlossener Stellung,
- Fig. 6:: das Überdruckventil in geöffneter Stellung,
- Fig. 7:: das Sicherheitsventil in geschlossener Stellung und
- Fig. 8:: das Sicherheitsventil in geöffneter Stellung.

Nach der Zeichnung besteht das dort dargestellte Ausführungsbeispiel des Niederdruckkochtopfs aus einem runden Topf 1, der mit zwei seitlichen Handgriffen 2 versehen ist, sowie einem auf die obere Öffnung des Topfs 1 passenden Deckel 3.

An dem Topf ist rund um seine obere Öffnung herum ein nach außen gebogener Schüttrand 4 vorgesehen.

Der Deckel 3 ist mit einem Dichtring 5 ausgestattet, der aus elastischem Material gefertigt ist. Der Deckel 3 weist weiterhin einen Verschlussmechanismus auf, der mit zwei beweglichen Klauen 6 zum Hintergreifen des Schüttrandes 4 ausgestattet ist.

Ferner ist an dem Deckel 3 ein Handgriff 7 vorgesehen, an welchem ein Betätigungselement 8 zum radialen Verschieben der Klauen 6 angeordnet ist. Das Betätigungselement 8 ist als kleiner, mit dem Daumen zu betätigender Hebel 9 ausgebildet, der unter dem Handgriff 7 des Deckels 3 angeordnet ist und eine Welle 10 antreibt, die in vertikaler Lage in dem bogenförmigen Handgriff 7 des Deckels 3 gelagert ist. Auf der Welle 10 sitzt ein Ritzel 11, welches auf gegenüberliegenden Seiten mit Zahnstangen 12 im Eingriff steht. Die Zahnstangen 12 sind Teile von Schubstangen 13, die starr mit den Klauen 6 verbunden sind und bei Rotation des Ritzels 11 vor- oder zurückbewegt werden. Bei Rotation des Ritzels 11 im Uhrzeigersinn werden die Zahnstangen 12 mit den Schubstangen 13 radial nach außen geschoben, sodass die Klauen 6 zum Öffnen des Deckels 3 die entriegelte Stellung einnehmen. Bei Rotation des Ritzels 11 in entgegengesetzter Richtung werden die Klauen 6 radial nach innen gezogen und verriegeln den Deckel 3 fest auf dem Schüttrand 4 des Topfes 1.

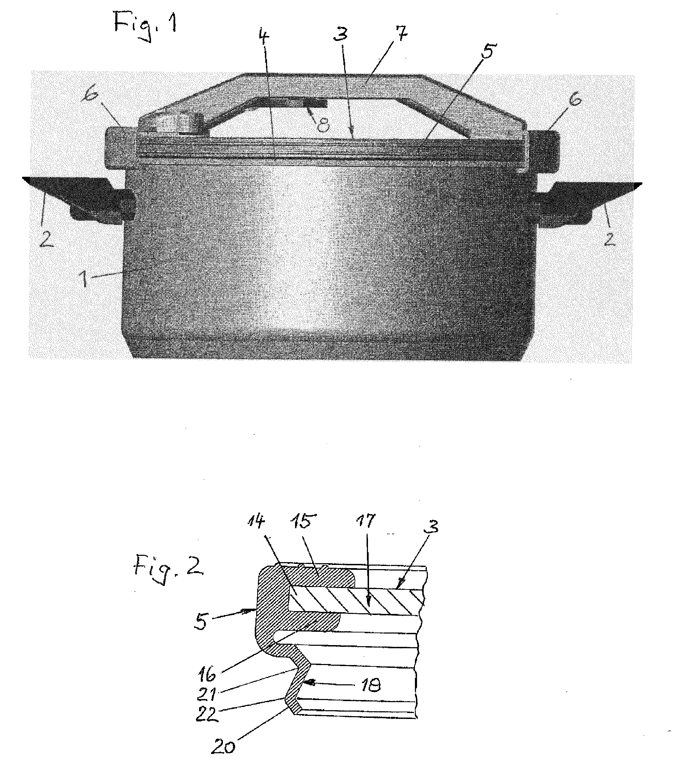

Wie insbesondere aus den Figuren 2 sowie 7 und 8 zu entnehmen ist, umgibt der Dichtring 5 den äußeren Umfang des Deckelrandes 14. Der Dichtring 5 weist zu diesem Zweck in seinem oberen Bereich einen oberen Flansch 15 und einen, im Abstand von diesem angeordnet, unteren Flansch 16 auf.

Der Deckel 3 besteht aus einer ebenflächigen Scheibe 17, die aus Glas oder durchsichtigem Kunststoff besteht, aber auch aus Metall gefertigt sein kann.

Die beiden Flansche 15 und 16 übergreifen die Ober- und Unterseite der Scheibe 17 und schließen diese dicht zwischen sich ein.

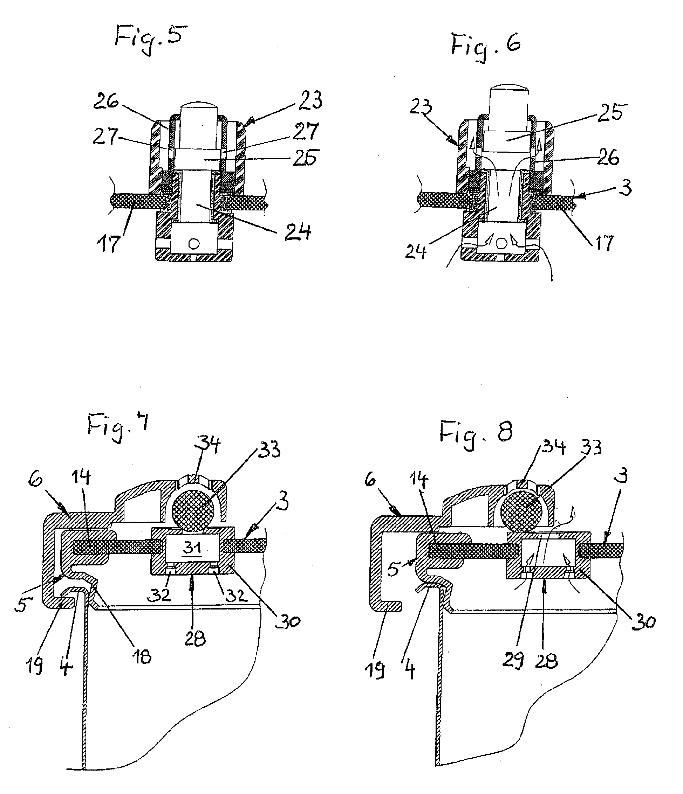

Ferner weist der Dichtring 5 eine Dichtlippe 18 auf, die vom Außenrand des Dichtrings 5 ausgeht und sich in Richtung zum Topf 1 hin erstreckt. Bei aufgesetztem Deckel 3 liegt die Dichtlippe 18 unter Spannung an der Innenseite des Topfes 1 an, wie insbesondere aus den Figuren 7 und 8 zu erkennen ist.

Die Dichtlippe 18 erstreckt sich so weit nach unten, dass sie noch an der Innenseite des Topfes 1 anliegt, wenn der Deckel 3 in der Betriebsstellung leicht angehoben ist, wie in Fig. 7 dargestellt. In dieser Stellung liegen die Klauen 6 mit ihren an ihren Unterseiten ausgebildeten Verriegelungsschenkeln 19 an der Unterseite des Schüttrandes 4 an, wodurch die Betriebsstellung des Deckels 3 auf dem Topf 1 definiert ist.

An ihrem unteren Ende weist die Dichtlippe 18 einen schräg nach innen gebogenen umlaufenden Bereich 20 auf, dessen Außendurchmesser kleiner als der Innendurchmesser des Topfes 1 ist. Dadurch ist gewährleistet, dass beim Aufsetzen des Deckels 3 auf den Topf 1 die Dichtlippe 18 in das Topfinnere geführt wird und sich dann unter geringer Verformung an die Innenseite des Topfes 1 anlegt.

Oberhalb des schräg nach innen gerichteten Bereichs 20 der Dichtlippe 18 weist diese eine Einschnürung 21 auf. Dadurch entsteht zwischen der Einschnürung 21 und dem schräg nach innen gerichteten Bereich 20 der Dichtlippe 18 ein umlaufender Vorsprung 22, der als einziger Abschnitt der Dichtlippe 18 an der Innenfläche des Topfes 1 anliegt und dadurch eine gute Dichtwirkung erzielt.

In dem Deckel 3 ist nahe seinem Außenrand ein übliches Überdruckventil 23 vorgesehen, welches für die Einstellung eines Überdrucks sorgt. Das Überdruckventil 23 ist als Gewichtsventil ausgebildet. Dieses besteht im Wesentlichen aus einer sich dicht durch den Deckel 3 erstreckenden Hülse 24 sowie einem Gewicht 25, welches in vertikaler Richtung in einer sich an die Hülse 24 anschließenden rohrförmigen Führung 26 gleiten kann. Wenn sich im Innern des Topfes 1 noch kein Druck aufgebaut hat bzw. der Druck noch sehr gering ist, liegt das Gewicht 25 auf der offenen Oberseite der Hülse 24 auf und verschließt das Innere des Topfes 1. Wenn der Druck dann einen kritischen Pegel einnimmt, hebt sich das Gewicht 25 allmählich an, bis der Dampfdruck durch seitliche Öffnungen 27 in der rohrförmigen Führung 26 entweichen kann, wie in Fig. 6 dargestellt.

Zusätzlich zu diesen beschriebenen Überdruckventil 23 ist an dem Deckel 3 ein Sicherheitsventil 28 vorgesehen, welches insbesondere in den Figuren 7 und 8 im Detail dargestellt ist. Das Sicherheitsventil 28 ist in dem Deckel 3 im Bereich einer Klaue 6 angeordnet.

Das Sicherheitsventil 28 besteht im Wesentlichen aus einer sich durch den Deckel 3 hindurch erstreckenden Durchlassöffnung 29. Die Durchlassöffnung 29 ist in der Oberseite eines Bauteils 30 angeordnet, welches dicht in dem Deckel 3 verankert ist und in seiner Mitte einen Hohlraum 31 umschließt. In diesen Hohlraum 31 münden von unten her kleine Durchgangskanäle 32, sodass der Innenraum des Topfes 1 über diese Durchgangskanäle 32 mit dem Hohlraum 31 sowie über die Durchlassöffnung 29 mit der äußeren Umgebung verbunden ist.

In der Betriebsstellung des Kochtopfs, bei der Deckel 3 fest auf dem Topf 1 verankert ist, ist die Durchlassöffnung 29 mit einem lose auf dieser aufliegenden kugelförmigen Verschlusskörper 33 abgedeckt. Das Gewicht des Verschlusskörpers 33 bewirkt, dass sich im Innern des Topfes 1 ein gewisser Druck aufbauen kann.

Der Verschlusskörper 33 ist von einer Abdeckhaube 34 umgeben, wobei diese dem kugelförmigen Verschlusskörper 33 ausreichend Spiel lässt, um sich bei Bedarf von der Durchlassöffnung 29 abzuheben. Die Abdeckhaube 34 ist Teil einer der beiden beweglichen Klauen 6, sodass der Verschlusskörper 33 mittels der mit der jeweiligen Klaue 6 verbundenen Abdeckhaube 34 bewegt wird. In der verriegelten Stellung der Klauen 6 befindet sich die Abdeckhaube 34 unmittelbar über der Durchlassöffnung 29, sodass der Verschlusskörper 33 diese abdeckt. Die Durchlassöffnung 29 ist kreisrund ausgebildet, sodass der kugelförmige Verschlusskörper 33 diese im verriegelten Zustand des Deckels 3 dicht verschließen kann.

Wenn der Deckel geöffnet werden soll, werden die Klauen 6 durch Betätigung des Hebels 9 radial nach außen verschoben. Aufgrund dieser Verschiebung der Klauen 6 wandert auch die Abdeckhaube 34 mit nach außen und nimmt dabei den kugelförmigen Verschlusskörper 33 mit, sodass bereits während des Entriegelungsvorgangs des Deckels 3 der innere Dampfdruck nach außen entweichen kann. Wenn der Deckel 3 anschließend von dem Topf 1 abgenommen wird, ist der Druckausgleich zwischen dem Innenraum des Topfes 1 und der Umgebung bereits hergestellt, und es besteht keine Gefahr mehr, dass die Bedienungsperson durch den plötzlich aus dem Topf aufsteigenden heißen Dampf verletzt wird. Das Austreten des Dampfes durch das Sicherheitsventil 28 geschieht an einer radial außen liegenden Stelle des Deckels 3, wo der Dampfaustritt für die Bedienungsperson ungefährlich ist.

### Bezugszeichenliste

- 1: Topf
- 2: Handgriffe
- 3: Deckel
- 4: Schüttrand
- 5: Dichtring
- 6: Klauen
- 7: Handgriff
- 8: Betätigungselement
- 9: Hebel
- 10: Welle
- 11: Ritzel
- 12: Zahnstangen
- 13: Schubstangen
- 14: Deckelrand
- 15: oberer Flansch des Dichtrings
- 16: unterer Flansch des Dichtrings
- 17: Scheibe
- 18: Dichtlippe
- 19: Verriegelungsschenkel
- 20: nach innen gebogener Bereich der Dichtlippe
- 21: Einschnürung
- 22: Vorsprung
- 23: Überdruckventil
- 24: Hülse
- 25: Gewicht
- 26: Führung
- 27: Öffnungen
- 28: Sicherheitsventil
- 29: Durchlassöffnung
- 30: Bauteil
- 31: Hohlraum
- 32: Durchgangskanäle
- 33: Verschlusskörper
- 34: Abdeckhaube

## Patentansprüche

1. Niederdruckkochtopf, bestehend aus einem mit einem bestimmten Fassungsvermögen versehenen runden oder ovalen Topf (1), der um seine obere Öffnung herum einen nach außen gebogenen Schüttrand (4) aufweist, einem auf die obere Öffnung passenden Deckel (3) mit einem Dichtring (5) aus elastischem Material, einem an dem Deckel (3) vorgesehenen Verschlussmechanismus, der mit beweglichen Klauen (6) zum Hintergreifen des Schüttrandes (4) ausgestattet ist, sowie einem in dem Deckel (3) vorgesehenen Überdruckventil (23), wobei der Dichtring (5) den äußeren Umfang des Deckelrandes (14) umgibt und den Deckelrand mit einem oberen Flansch (15) und einem unteren Flansch (16) umgreift, **dadurch gekennzeichnet, dass** an dem Dichtring (5) eine von seinem äußeren Umfang ausgehende Dichtlippe (18) vorgesehen ist, die ein Stück nach innen versetzt ist und sich nach unten erstreckt, dass die Dichtlippe (18) bei aufgesetztem Deckel (3) unter Spannung an der Innenseite des Topfes (1) anliegt und dass sich die Dichtlippe (18) so weit nach unten erstreckt, dass sie noch an der Innenseite des Topfes (1) anliegt, wenn der Deckel (3) in der Betriebsstellung leicht angehoben ist und die Klauen (6) mit ihren unteren Verriegelungsschenkeln (19) an der Unterseite des Schüttrandes (4) des Topfes (1) anliegen.

2. Niederdruckkochtopf nach Anspruch 1, **dadurch gekennzeichnet, dass** die Dichtlippe (18) an ihrem unteren Ende einen schräg nach innen geneigten, umlaufenden Bereich (20) aufweist und dass der untere Rand des nach innen geneigten Bereichs (20) der Dichtlippe (18) einen Außendurchmesser aufweist, der kleiner als der Innendurchmesser des Topfes (1) ist.

3. Niederdruckkochtopf nach Anspruch 2, **dadurch ge** - **kennzeichnet**, dass die umlaufende Dichtlippe (18) des Dichtrings (5) oberhalb des schräg nach innen geneigten Bereichs (20) eine Einschnürung (21) aufweist.

4. Niederdruckkochtopf nach Anspruch 3, **dadurch ge** - **kennzeichnet**, dass die Dichtlippe (18) in der Betriebsstellung mit einem nach außen gerichteten umlaufenden Vorsprung (22), der zwischen dem nach innen geneigten Bereich (20) und der Einschnürung (21) gebildet ist, an der Innenwand des Topfes (1) anliegt.

5. Niederdruckkochtopf nach einem der Ansprüche 1 bis 4, **dadurch gekennzeichnet, dass** der Deckel (3) als ebenflächige Scheibe (17) ausgebildet ist.

6. Niederdruckkochtopf nach Anspruch 5, **dadurch ge - kennzeichnet**, dass der scheibenförmige Deckel (3) aus durchsichtigem Material besteht.

7. Niederdruckkochtopf nach einem der Ansprüche 1 bis 6, **gekennzeichnet durch** einen an dem Deckel (3) vorgesehenen Handgriff (7) sowie einen an dem Handgriff (7) angeordneten Betätigungselement (8) zum Lösen und Verriegeln der Klauen (6).

## Claims

1. Low-pressure cooking pot, composed of a round or oval pot (1) which is provided with a defined capacity and which has an outwardly curved pouring edge (4) around its upper edge, a lid (3) which is suitable for the upper opening and which comprises a sealing ring (5) made of elastic material, a closure mechanism which is provided on the lid (3) and which is equipped with movable claws (6) in order to engage behind the pouring edge (4), and a pressure-relief valve (23) provided in the lid (3), wherein the sealing ring (5) surrounds the outer circumference of the lid edge (14) and engages around the lid edge with an upper flange (15) and a lower flange (16), ***characterized in* that** a sealing lip (18) which extends outwards from the outer circumference of the sealing ring is provided on the sealing ring (5), said sealing lip (18) being offset inwards to a certain extent and extending downwards, that the sealing lip (18) rests against the inner face of the pot (1) under tension when the lid (3) is placed on the pot (1), and that the sealing lip (18) extends downwards so far that it still rests against the inner face of the pot (1) when the lid (3) is slightly lifted in its operating position and the claws (6) rest with their lower locking legs (19) against the lower side of the pouring edge (4) of the pot (1).

2. Low-pressure cooking pot according to claim 1, ***characterized in* that** the sealing lip (18) presents on its lower end an inwardly inclined circumferential region (20) and that the lower edge of the inwardly inclined region (20) of the sealing lip (18) has an outer diameter which is smaller than the inner diameter of the pot (1) .

3. Low-pressure cooking pot according to claim 2, **characterized in that** the circumferential sealing lip (18) of the sealing ring (5) includes a constriction (21) above said inwardly inclined region (20).

4. Low-pressure cooking pot according to claim 3, **characterized in that** in its operating position, said sealing lip (18) rests against the inner face of the pot (1) with its outwardly directed circumferential protrusion (22) that is formed between the inwardly inclined region (20) and the constriction (21).

5. Low-pressure cooking pot according to one of the claims 1 to 4, **characterized in that** the lid (18) is formed as a planar disc (17).

6. Low-pressure cooking pot according to claim 5, **characterized in that** the disc-shaped lid (3) consists of a transparent material.

7. Low-pressure cooking pot according to one of the claims 1 to 6, **characterized by** a handle (7) provided on the lid (3), and an actuating element (8) which is arranged on the handle (7) for releasing and locking the claws (6) .

## Revendications

1. Marmite à basse pression, se composant d'une marmite (1) ronde ou ovale d'une contenance définie qui présente autour de son ouverture supérieure une bordure de vidange (4) pliée vers l'extérieur, d'un couvercle (3) approprié à l'ouverture supérieure et comprenant une bague d'étanchéité (5) en matériau élastique, d'un mécanisme de fermeture qui est prévu au couvercle (3) et est muni des pattes mobiles (6) pour engager derrière la bordure de vidange (4), et une soupape de surpression (23) prévue dans le couvercle (3), la bague d'étanchéité (5) encerclant la circonférence extérieure du bord de couvercle (14) et entourant le bord de couvercle avec une bride supérieure (15) et une bride inférieure (16), ***caractérisée en* ce qu'**à la bague d'étanchéité (5) il est prévue une lèvre d'étanchéité (18) qui s'étend à partir de la circonférence extérieure de la bague d'étanchéité, lèvre d'étanchéité (18) qui est décalée un peu vers l'intérieur et s'étend vers le bas, que la lèvre d'étanchéité (18), avec le couvercle (3) mis sur la marmite, s'applique sous tension contre la face interne de la marmite (1) et que la lèvre d'étanchéité (18) s'étend vers le bas une distance que celle-ci encore s'applique contre la face interne de la marmite (1) lorsque le couvercle en position de fonctionnement est soulevé un peu et les pattes (6) s'appliquent, avec ses branches de verrouillage inférieures (19), contre la face inférieure de la bordure de vidange (4) de la marmite (1).

2. Marmite à basse pression selon la revendication 1, ***caractérisée en* ce qu'**à son extrémité inférieure, la lèvre d'étanchéité (18) présente une partie périphérique (20) inclinée vers l'intérieur et **en ce que** le bord inférieur de la partie (20) inclinée vers l'intérieur de la lèvre d'étanchéité (18) présente un diamètre plus petit que le diamètre intérieur de la marmite (1).

3. Marmite à basse pression selon la revendication 2, ***caractérisée en* ce qu'**au-dessus de la partie (20) inclinée vers l'intérieur, la lèvre d'étanchéité (18) périphérique de la bague d'étanchéité (5) présente une gorge (21) .

4. Marmite à basse pression selon la revendication 3, **caractérisée en ce qu'**en position de fonctionnement, la lèvre d'étanchéité s'applique, avec une projecture périphérique (22) orientée vers l'intérieur formée entre la partie (20) inclinée vers l'intérieur et la gorge (21), contre la face interne de la marmite (1).

5. Marmite à basse pression selon l'une des revendications 1 à 4, **caractérisé en ce que** le couvercle (3) est en forme de disque plane (17).

6. Marmite à basse pression selon la revendication 5, **caractérisée en ce que** le couvercle (3) en forme de disque plane consiste en matériau transparent.

7. Marmite à basse pression selon l'une des revendications 1 à 6, **caractérisée par** une poignée (7) prévue au couvercle (3) et par un élément de manoeuvre (8) disposé à la poignée (7), pour déverrouiller et verrouiller les pattes (6).
